(19) Europäisches Patentamt
European Patent Office
Office européen des brevets

(11) Veröffentlichungsnummer: **0 012 365 B1**

(12) # EUROPÄISCHE PATENTSCHRIFT

(45) Veröffentlichungstag der Patentschrift: **14.10.81**

(51) Int. Cl.³: **A 23 F 5/20**

(21) Anmeldenummer: **79104955.4**

(22) Anmeldetag: **06.12.79**

(54) **Verfahren zum Entcoffeinieren von Rohkaffee.**

(30) Priorität: **08.12.78 DE 2853169**

(43) Veröffentlichungstag der Anmeldung: **25.06.80 Patentblatt 80/13**

(45) Bekanntmachung des Hinweises auf die Patenterteilung: **14.10.81 Patentblatt 81/41**

(84) Benannte Vertragsstaaten: **AT BE CH FR IT LU NL SE**

(56) Entgegenhaltungen:
**CH-A-157 021**
**DE-A-2 737 793**
**DE-A-2 737 794**
**FR-A-597 392**
**CHEMICAL ABSTRACTS, Band 55, Nr. 12, Spalte 2946e, 1961, Columbus, Ohio, USA**
**P. NAVELLIER et al.: »Use of methylal for the determination of the fat content of milk«**

(73) Patentinhaber: **HAG Aktiengesellschaft, Hagstrasse, D-2800 Bremen 1 (DE)**

(72) Erfinder: **Werkhoff, Peter, Dr., Christian-Andersen-Weg 27, D-2805 Stuhr 4 (DE)**
Erfinder: **Hubert, Peter, Upper Borg 125, D-2800 Bremen 33 (DE)**

(74) Vertreter: **Abitz, Walter, Dr.-Ing. et al, Abitz, Morf, Gritschneder P.O. Box 86 01 09, D-8000 München 86 (DE)**

EP 0 012 365 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zum Entcoffeinieren von Rohkaffee

Die Erfindung betrifft ein Verfahren zum Entcoffeinieren von gegebenenfalls mit Wasser oder Wasserdampf aufgeschlossenem Rohkaffee durch Behandeln mit organischen Lösungsmitteln und Entfernen der Lösungsmittelreste durch Dämpfen.

Hierzu benötigt man ein Lösungsmittel, das Coffein möglichst selektiv extrahiert, d. h. nicht andere Kaffee-Inhaltsstoffe ebenfalls extrahiert. Außerdem muß das verwendete Lösungsmittel rückstandsfrei aus dem bearbeiteten Kaffee zu entfernen sein.

Die bekannten Verfahren zur Entcoffeinierung von Rohkaffee arbeiten zum größten Teil mit halogenhaltigen Kohlenwasserstoffen, wie Trichloräthylen, Dichloräthan oder Chloroform, wegen des selektiven Lösungsvermögens dieser Lösungsmittel für Coffein. Die Verwendung dieser Lösungsmittel begegnet aber in jüngerer Zeit gesundheitlichen Bedenken.

In anderen bekannten Verfahren verwendet man Ester, Ketone, leichte Kohlenwasserstoffe oder Äther. Ester sind aber leicht verseifbar, wobei es schwierig ist, die Verseifungsprodukte Säuren und Alkohole ausreichend aus dem Kaffee zu entfernen. Ketone entfernen wegen ihrer relativ großen Polarität Coffein zu wenig selektiv. Kohlenwasserstoffe und Äther lösen Coffein schlecht, so daß man relativ hohe Temperaturen und lange Bearbeitungszeiten in Kauf nehmen muß.

Der Erfindung liegt die Aufgabe zugrunde, Rohkaffee mit einem organischen Lösungsmittel zu entcoffeinieren, das ein großes selektives Lösungsvermögen für Coffein hat und leicht und möglichst vollständig aus dem entcoffeinierten Kaffee durch Dämpfen entfernt werden kann.

Diese Aufgabe wird dadurch gelöst, daß man als Lösungsmittel zum Entcoffeinieren des gegebenenfalls mit Wasser oder Wasserdampf aufgeschlossenen Rohkaffees Acetale der allgemeinen Formel

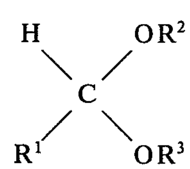

einsetzt, worin $R^1$ Wasserstoff oder Methyl und $R^2$ und $R^3$ Methyl oder Äthyl bedeuten, verwendet. Nach der Entcoffeinierung werden die Lösungsmittelreste durch Dämpfen entfernt.

Überraschenderweise zeichnen sich die erfindungsgemäß verwendeten Acetale durch eine hohe Selektivität gegenüber Coffein aus, was aufgrund ihrer Polarität und teilweise auch Wasserlöslichkeit nicht zu erwarten war. Gleichzeitig werden die unerwünschten Wachsauflagerungen der Bohne abgelöst, die zur Bildung von sogenannten Reizstoffen beim Rösten führen. Die erfindungsgemäß verwendeten Acetale lassen sich nach der Entcoffeinierung leicht aus den Kaffeebohnen durch Dämpfen entfernen.

Der eingesetzte Rohkaffee kann in bekannter Weise mit Wasser oder Wasserdampf aufgeschlossen worden sein auf einen Wassergehalt von 20–50%, bezogen auf das Gewicht von Kaffee plus Wasser. Man kann aber auch ungedämpften Rohkaffee einsetzen, wenn man den Wassergehalt des eingesetzten Acetals entsprechend erhöht.

Während der Entcoffeinierung soll der Wassergehalt des Kaffees unverändert bleiben, um eine konstante Entcoffeinierungsgeschwindigkeit zu gewährleisten. Dies ist durch folgende Maßnahmen zu erreichen.

a) Befeuchtung des Lösungsmittels,
b) Arbeiten bei niedrigen Temperaturen (= niedrigeres Lösungsvermögen der Acetale für Wasser),
c) Zusatz einer Komponente, die wenig oder kein Wasser löst, die Selektivität des Coffeinentzugs aber nicht verändert.

Manche Acetale neigen in saurem Milieu zur Verseifung, wobei Aldehyd und Alkohol entstehen. Besonders der Alkohol wird dann so im Rohkaffee gebunden, daß er bei der nachfolgenden Dämpfung nur unvollständig entfernt wird. Zur Vermeidung einer Spaltung können erfindungsgemäß den Acetalen ein Orthoameisensäureester, wie ein niedriger Alkylester, besonders Orthoameisensäuretrimethylester oder -triäthylester, oder Dimethylcarbonat zugesetzt werden. Diese Zusätze haben gleichzeitig den wünschenswerten Effekt, die Wasserlöslichkeit des Systems herabzusetzen. Diese Zusätze werden vorzugsweise in Mengen von 2 bis 10, besonders 6 bis 8%, bezogen auf das Gewicht des Acetals, verwendet.

Als Acetale sind 1,1-Diäthoxymethan, 1,1-Dimethoxymethan und 1,1-Dimethoxyäthan, insbesondere Dimethoxymethan, bevorzugt. Man kann auch azeotrope Mischungen von Dimethoxymethan mit Wasser (1,4 Gew.-%), Isopentan (70 Gew.-%), Penten-1 (74 Gew.-%), Pentan (72 Gew.-%), Penten-2 (71 Gew.-%) und Clyclopentan (38 Gew.-%) einsetzen.

Die bei der Entcoffeinierung verwendete Temperatur kann zwischen 20 und ca. 100°C liegen, bevorzugt ist der Bereich zwischen 20 und 50° C, besonders 20 bis 40° C.

Das eingesetzte Lösungsmittel enthält vorzugsweise bereits diejenige Wassermenge, die dem Verteilungskoeffizienten des Wassers zwischen feuchtem Rohkaffee und Lösungsmittel und seiner Abhängigkeit von der Temperatur entspricht, um den Wassergehalt im Kaffee konstant zu halten. Vorzugsweise wird das Lösungsmittel im Kreislauf durch den in einem Extraktionsbehälter befindlichen Kaffee gepumpt. Die Menge wird so dosiert, daß die ganze Kaffeeschüttung bedeckt ist. Die Laufzeit beträgt üblicherweise 1 bis 5 Stunden. Insgesamt wird der Kaffee meist mit 4 Lösungsmittelchargen bearbeitet. Das coffein- und wachshaltige Lösungsmittel wird durch Destillation zurückgewonnen und das Coffein aus dem Sumpf in bekannter Weise in reiner Form isoliert. Der behandelte Kaffee wird mit Sattdampf von 105 – 120° C von Lösungsmittelresten befreit und anschließend einer Vakuum- oder Heißlufttrocknung unterworfen.

Der aus dem so bearbeiteten Material hergestellte Röstkaffee unterscheidet sich sowohl im Aussehen als auch in seinen geschmacklichen Eigenschaften nicht von Röstkaffee aus nichtbehandeltem Ausgangsmaterial. In einigen Fällen, in denen minderwertige Provenienzen zur Entcoffeinierung nach diesem Verfahren herangezogen wurden, konnte eine Verfeinerung und Verbesserung der normalerweise harten Geschmacksnoten erreicht werden.

### Beispiel 1

100 kg Rohkaffee werden bei 105° C gedämpft bis zu einem Wassergehalt von 28 Gew.-%. Dann werden viermal je 200 Liter reines Dimethoxymethan, versetzt mit 5 Gew.-% Wasser, zugesetzt und jeweils 1,5 Stunden im Kreislauf bei 40° C durch die Kaffeeschüttung gepumpt. Nach Abtrennung des Lösungsmittels wird der Kaffee zwei Stunden mit 30 kg Sattdampf/h von 105° C gedämpft und anschließend im Vakuum bei 50° C auf 11 Gew.-% Restfeuchte getrocknet. Die Analyse, verglichen mit dem Ausgangsmaterial, ergibt folgende Werte:

| | Röstkaffee, behandelt [Gew.-%] | Röstkaffee, unbehandelt [Gew.-%] |
|---|---|---|
| Coffeingehalt | 0,06% | 1,24% |
| Extraktgehalt | 26,3% | 27,7% |
| Trigonellin | 0,56% | 0,57% |
| Chlorogensäure | 3,2% | 3,1% |
| CHT | 210 ppm | 520 ppm |

### Beispiel 2

100 kg Rohkaffee, aufgeschlossen wie im Beispiel 1, werden viermal mit je 200 Liter Diäthoxymethan mit einem Zusatz von 8 Gew.-% Dimethylcarbonat, jeweils eine Stunde bei 60° C behandelt. Nach Beendigung der Lösungsmittelbehandlung wird der Kaffee 2,5 Stunden mit Sattdampf von 110° C gedämpft und anschließend getrocknet. Eigenschaften und analytische Daten des Röstkaffees entsprechen denen des behandelten Röstkaffees des Beispiels 1.

## Patentansprüche

1. Verfahren zum Entcoffeinieren von gegebenenfalls mit Wasser oder Wasserdampf aufgeschlossenem Rohkaffee durch Behandeln mit organischen Lösungsmitteln und Entfernen der Lösungsmittelreste durch Dämpfen, dadurch gekennzeichnet, daß man als Lösungsmittel Acetale der allgemeinen Formel

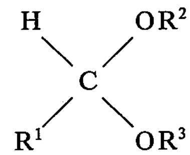

einsetzt, worin $R^1$ Wasserstoff oder Methyl und $R^2$ und $R^3$ Methyl oder Äthyl bedeuten.

2. Verfahren nach Anspruch 1, dadurch gekennzeichnet, daß man als Acetal 1,1-Diäthoxymethan, 1,1-Dimethoxymethan oder 1,1-Dimethoxyäthan verwendet.

3. Verfahren gemäß Anspruch 1 oder 2, dadurch gekennzeichnet, daß das eingesetzte Acetal bereits diejenige Wassermenge enthält, die dem Verteilungskoeffizienten des Wassers zwischen Acetal und feuchtem Rohkaffee und der Bearbeitungstemperatur entspricht.

4. Verfahren gemäß einem der Ansprüche 1 bis 3, dadurch gekennzeichnet, daß man bei Temperatur zwischen Raumtemperatur und 100° C arbeitet.

## Claims

1. Process for decaffeinating green coffee optionally hydrolyzed with water or steam by treatment with organic solvents and removal of the solvent residues by steaming, characterized in that the solvents employed are acetals of the general formula

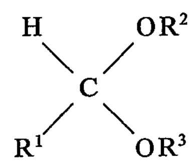

wherein $R^1$ is hydrogen or methyl and $R^2$ and $R^3$ are methyl or ethyl.

2. Process according to claim 1 characterized in that the acetal used is 1,1-diethoxymethane, 1,1-dimethoxymethane or 1,1-dimethoxyethane.

3. Process according to claims 1 or 2, characterized in that the acetal used already contains that amount of water corresponding to the water distribution coefficient between acetal and moist green coffee and the treatment temperature.

4. Process according to one of claims 1 to 3, characterized in that it is carried out at temperatures between room Temperature and 100°C.

**Revendications**

1. Procédé de décaféination du café vert, éventuellement désagrégé avec de l'eau ou de la vapeur d'eau, par traitement avec des solvants organiques et élimination du solvant résiduaire par traitement à la vapeur, caractérisé en ce qu'on utilise comme solvants des acétals de formule générale:

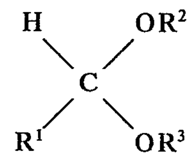

dans laquelle $R^1$ est hydrogène ou méthyle, et $R^2$ et $R^3$ sont méthyle ou éthyle.

2. Procédé selon la revendication 1, caractérisé en ce qu'on utilise, comme acétal, diéthoxy-1,1 méthane, diméthoxy-1,1 méthane ou diméthoxy-1,1 éthane.

3. Procédé selon la revendication 1 ou 2, caractérisé en ce que l'acétal introduit contient déjà la quantité d'eau qui correspond au coefficient de répartition de l'eau entre l'acétal et le café vert humide, et à la température de traitement.

4. Procédé selon une des revendications 1 à 3, caractérisé en ce qu'on opère à des températures comprises entre la température ambiante et 100°C.